Europäisches Patentamt

European Patent Office

Office européen des brevets

(19)

(11) Numéro de publication: **0 364 429**

**A1**

(12)

# DEMANDE DE BREVET EUROPEEN

(21) Numéro de dépôt: 89870146.1

(51) Int. Cl.⁵: **B66D 1/74**

(22) Date de dépôt: **04.10.89**

(30) Priorité: **11.10.88 FR 8813715**

(43) Date de publication de la demande:
**18.04.90 Bulletin 90/16**

(84) Etats contractants désignés:
**AT BE CH DE ES GB GR IT LI LU NL SE**

(71) Demandeur: **Gattoni, Laurent**
**Chemin de Gastefer**
**F-31700 Cornebarieu Blagnac(FR)**

Demandeur: **Bras, Jean**
**9, bis chemin de Bourdette**
**F-31400 Toulouse(FR)**

(72) Inventeur: **Gattoni, Laurent**
**Chemin de Gastefer**
**F-31700 Cornebarieu Blagnac(FR)**
Inventeur: **Bras, Jean**
**9, bis chemin de Bourdette**
**F-31400 Toulouse(FR)**

(74) Mandataire: **Dellicour, Paul**
**Office de Brevets E. Dellicour rue Fabry**
**18/012**
**B-4000 Liège(BE)**

(54) **Appareil pour la traction de charges sur câbles lisses.**

(57) L'invention concerne un appareil pour l'élévation ou la descente de charges sur câbles lisses 3 comprenant au moins deux poulies fixes inférieure 4 et supérieure 5 agencées coplanairement pour faire former un S audit câble 3 entouré à l'intérieur des gorges desdites poulies. Cet appareil est remarquable en ce que les deux poulies 4 et 5 sont accouplées coaxialement à deux roues dentées 12 et 13 motrices entraînées en sens inverse et montées coplanairement de manière à engrener l'une dans l'autre, les deux arbres d'entraînement 6 et 7 sur lesquels sont calées les poulies 4 et 5 et les roues dentées 12 et 13 étant montés en libre rotation à l'intérieur de deux flasques parallèles 1a et 1b qui, formant bâti 1, supportent intérieurement les deux roues dentées engrenées 12 et 13 et extérieurement, en porte-à-faux, les susdites poulies 4 et 5.

fig. 2

## Appareil pour le traction de charges sur câbles lisses.

La présente invention a trait à un appareil de traction qui, par un entraînement par friction sur un câble lisse vertical à texture métallique ou textile (corde), assure de préférence l'élévation ou la descente de charges le long d'un câble vertical.

L'invention concerne plus particulièrement les appareils ne comprenant pas de tambour d'entraînement. Elle s'applique plus précisément à celui du type comprenant au moins deux poulies fixes inférieure et supérieure agencées coplanairement pour faire former un S au câble enroulé à l'intérieur des gorges desdites poulies. L'effort d'entraînement par un mécanisme moteur destiné à assumer la commande de rotation des poulies est alors lié exponentiellement à l'angle total d'enroulement du câble autour des poulies et au coincement du câble dans les gorges de ces dernières.

A ce jour, de nombreux appareils appelés couramment treuils ou palans et ne comportant pas de tambour d'entraînement, ont déjà été proposés.

Un premier appareil dit "tire câble" ou "tirefort" est agencé de manière à ce que le câble soit entraîné dans les deux sens par deux blocs mâchoires auto-serrantes. Le mouvement est communiqué par un levier et un système de bielles avec démultiplication de l'effort de sorte que le câble traverse l'appareil sans s'y emmagasiner mais doit être introduit par une de ses extrémités.

Un autre appareil dit "palan minimule à corde" comporte une seule poulie à gorge agencée avec deux cliquets, l'un d'entraînement et l'autre d'arrêt. La poulie est positionnée entre deux longerons d'un bâti et la corde doit être introduite dans l'appareil par une de ses extrémités.

Un autre appareil dit "treuil ballarin" comporte trois poulies motrices calées sur un même arbre et entraînées par deux manivelles agissant sur un pignon et sur une roue dentée. Outre le fait d'introduire le câble par l'une de ses extrémités, il est nécessaire de faire une boucle autour de chaque poulie et de faire glisser le câble sur une longueur relativement importante tout en tournant les manivelles pour obtenir une tension minimale.

Faisant le bilan de cet état de fait, le demandeur a donc imaginé un nouvel appareil du type de celui comprenant au moins deux poulies fixes inférieure et supérieure agencées coplanairement pour faire former un **S** au câble enroulé à l'intérieur des gorges desdites poulies. Selon l'invention, cet appareil est remarquable en ce que les deux poulies sont accouplées coaxialement à deux roues dentées motrices entraînées en sens inverse et montées coplanairement pour engrener l'une dans l'autre, les deux arbres d'entraînement sur lesquels sont calées les poulies et les roues dentées étant montés en libre rotation à l'intérieur de deux flasques parallèles qui, formant bâti, supportent intérieurement les deux roues dentées et extérieurement, en porte-à-faux, les susdites poulies.

Cette disposition offre un grand avantage en permettant de renfermer tout le mécanisme d'entraînement à l'intérieur du bâti tout en laissant accessibles les deux poulies ce qui, bien évidemment autorise une mise en place de l'appareil en un point quelconque du câble puisque l'inconvénient majeur d'introduire le câble par l'une de ses extrémités est alors évité.

Selon un premier mode de réalisation de l'invention visant à assurer un fonctionnement manuel de l'appareil, les mouvements rotatifs inverses des deux roues dentées engrenées sont assujettis à deux cliquets qui, agencés aux deux extrémités d'une bielle, sont disposés de manière à ce que lorsque l'un est appliqué sur une roue et sert d'entraîneur au mouvement de rotation; l'autre, appliqué sur l'autre roue, sert alors de retenue au mouvement de rotation inverse. Ces deux cliquets sont également montés articulés sur deux leviers montés pivotants chacun autour d'un des deux arbres servant de pivot d'appui. L'un au moins ce ces leviers est pourvu d'un prolongement formant un bras de levier sur lequel est appliqué une force musculaire.

La prédisposition et la réversibilité des rôles des deux cliquets sont particulièrement avantageuses car tout en assumant la retenue des deux roues engrenées dans un sens de rotation, ces cliquets assurent aussi l'entraînement en rotation des roues dentées et ce, que les mouvements du bras de levier soient ascendants ou descendants.

Selon une forme de réalisation préférentielle de l'invention, les deux leviers sont pourvus chacun d'un prolongement formant bras et disposé le premier de manière à ce que le cliquet soit positionné entre le bras et l'arbre d'appui et le deuxième de manière à ce que l'arbre d'appui soit positionné entre le cliquet et le bras. Ainsi, le rendement musculaire est considérablement amélioré grâce à ce couple de travail moteur qui peut être assuré soit avec les deux mains, soit avec les deux pieds à l'aide d'étriers, soit mixte.

Selon un deuxième mode de réalisation de l'invention visant à assurer un fonctionnement motorisé de l'appareil, l'une des roues dentées au moins est engrenée dans un pignon accouplé sur l'arbre de sortie d'un entraînement moteur, via un réducteur de vitesse.

Bien que les aspects principaux de l'invention considérés comme nouveaux aient été exprimés ci-dessus, d'autres caractéristiques et d'autres avantages ressortiront plus clairement à la lecture de la description qui suit, donnant à titre d'exemples nons limitatifs et en regard des dessins annexés, divers modes de réalisation d'un appareil de levage ou de descente respectant les concepts fondamentaux de l'invention.

Sur ces dessins :

La figure 1 est une vue en coupe verticale transversale d'un premier mode de réalisation d'un tel appareil, mu par un moteur.

La figure 2 est une vue en perspective schématique d'un autre mode de réalisation d'un appareil, mu manuellement.

La figure 3 est une vue en perspective d'un autre mode de réalisation d'un appareil, mu soit par un moteur soit manuellement.

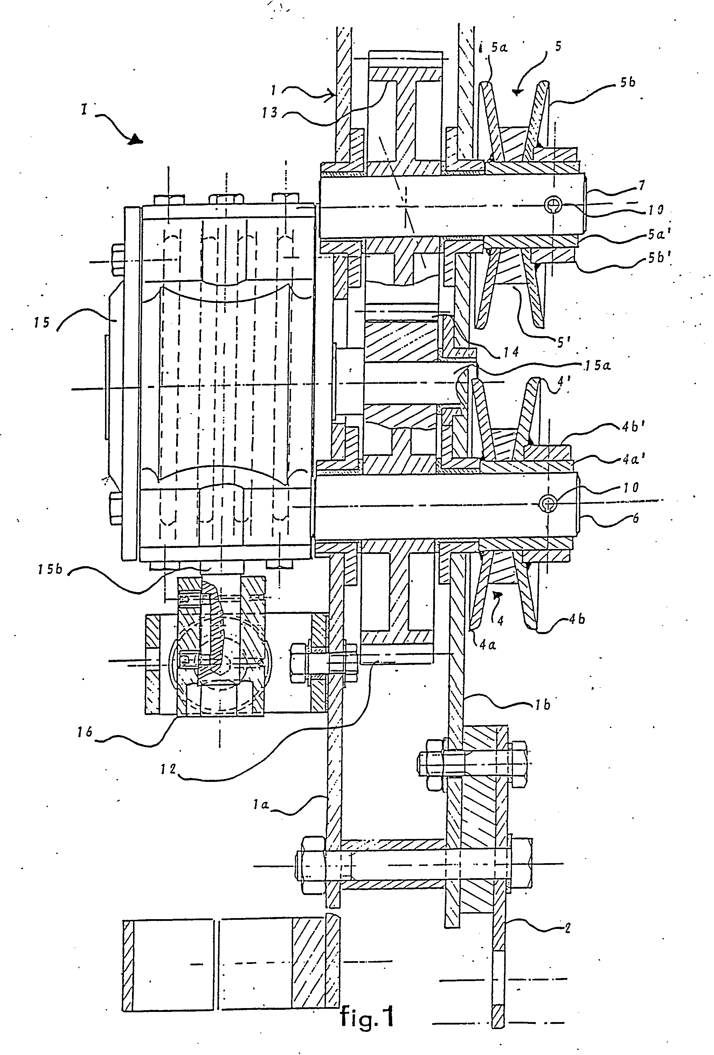

Les trois appareils, représentés sur les dessins des figures 1, 2 et 3 sont respectivement référencés I, II et III dans leur ensemble. Chacun de ces appareils est constitué d'un bâti 1 constitué de deux flasques parallèles 1a et 1b dont l'un (1b) est aménagé d'un mousqueton 2 destiné à supporter une charge par des moyens adaptés selon l'application qui sera faite de l'appareil (treuil, palan, etc...). Chaque appareil est destiné à assurer l'élévation ou la descente (flèche à double sens T) de la charge sur une corde lisse verticale 3 se décomposant en un brin supérieur 3a, tendu entre l'appareil et un point fixe P, et un brin inférieur libre 3b. Ce mouvement de translation T est obtenu grâce à deux poulies fixes inférieure 4 et supérieure 5 agencées coplanairement pour faire former un S à la corde 3 enroulé à l'intérieur des gorges desdites poulies. L'effort d'entraînement est lié exponentiellement à l'angle total d'enroulement de la corde 3 autour des poulies 4 et 5 et au coincement de la corde dans les gorges de ces dernières.

Comme on peut le voir plus en détails sur le dessin de la figure 1, les deux poulies 4 et 5 sont constituées chacune de deux joues dissociables 4a, 4b et 5a, 5b fixées chacune sur un moyeu 4a', 4b' et 5a', 5b'. Ces moyeux sont alésés de manière à ce que les moyeux 4a' et 5a' du côté flasque 1b d'une part, s'ajustent sur deux arbres d'entraînement 6 et 7 montés en libre rotation dans des coussinets portés par les flasques parallèles 1a et 1b du bâti 1, et que les moyeux 4b' et 5b' d'autre part s'ajustent sur les moyeux 4a' et 5a'. Ce caractère dissociable des joues des deux poulies 4 et 5 a pour objet d'autoriser, à l'aide d'un moyen de blocage approprié, le réglage de la distance d'écartement entre les deux joues de chaque poulie, réglage qui est modulable en fonction du diamètre de la corde 3 afin d'exercer un pincement sur ladite corde.

Ce réglage de pincement de la corde 3 à l'intérieur des gorges des poulies 4 et 5 peut évoluer en cours d'utilisation afin de laisser plus ou moins libre le glissement de la corde entourée autour des poulies de manière à faire frein pour doser la vitesse de descente de l'appareil lorsqu'il est utilisé comme descenseur en spéléologie ou en alpinisme. Ce réglage d'écartement des joues est utile pour les appareils II et III à entraînement manuel. A cet effet, les extrémités des arbres 6 et 7 portant les poulies 4 et 5, sont aménagées de filetages 6' et 7' sur lesquels viennent se visser ou se dévisser des écrous de serrage 8' et 9' formant les moyeux de volants de manoeuvre 8 et 9.

Le diamètre d'enroulement de la corde 3 peut être prédéterminé en agençant une bague de fond de gorge 4' et 5' entre les deux joues.

Dans le cas d'un entraînement motorisé tel que pour celui de l'appareil I, les mouvements de translation et de rotation des deux moyeux 4a', 4b' et 5a', 5b' sur leur arbre respectif 6 et 7 pour chacune des deux poulies 4 et 5, sont bloqués en rendant solidaires lesdits moyeux à leur arbre et ce, par clavetage au moyen de goupilles 10. Ce système est préférentiellement choisi lorsque les poulies sont disposées en bout d'arbre et entraînées en rotation par un moteur, la descente de l'appareil I le long de la corde 4 étant alors assurée par l'inversement des mouvements de rotation des poulies 4 et 5 et contrôlée en vitesse par celle de la rotation de l'arbre de sortie du moteur.

Afin de conforter l'adhérence de la corde 3 à l'intérieur des gorges desdites poulies 4 et 5, un galet-presseur 11 est maintenu appliqué contre la corde 3 par un ressort 11a.

Selon la caractéristique principale de l'invention, les deux poulies 4 et 5 sont accouplées coaxialement sur les arbres 6 et 7, à deux roues dentées motrices 12 et 13 entraînées en sens inverse et montées coplanairement entre les deux flasques 1a et 1b du bâti 1 de manière à ce que les deux poulies 4 et 5 se trouvent ainsi en porteà-faux à l'extérieur du bâti 1 facilitant la mise en place de la corde 3 et ce, en tout point de cette dernière.

L'entraînement de ces deux roues dentées peut être assuré soit en mode manuel, soit en mode motorisé, soit en mode mixte.

Dans l'appareil I illustré à la figure 1, l'entraînement entièrement motorisé, consiste à faire engrener l'une des deux roues dentées 12 et 13 dans les dents d'un pignon 14 disposé coplanairement entre les deux roues dentées 12 et 13 d'une part et entre les deux flasques 1a et 1b d'autre part. Ce pignon 14 est calé sur l'arbre de sortie 15a d'un réducteur de vitesse 15 dont le rapport de réduction est corrélatif à la vitesse d'enroulement de la corde 3 en fonction de sa tension, laquelle est proportionnelle au poids de la charge. L'arbre d'entrée 15 b de ce réducteur est équipé d'un manchon d'accouplement 16 avec un moteur du type perceuse-dévisseuse non représentée et dans lequel est agencé un frein à mâchoires d'écartement fixe à garnitures interchangeables. Ces mâchoires sont montées pivotantes autour d'un axe perpendiculaire à l'arbre d'entrée 15b du réducteur de manière à obtenir un couple de serrage proportionnel à la charge exercé sur l'arbre d'entrée du réducteur. En outre, ce frein fonctionne à double sens ce qui présente un grand intérêt lorsque l'utilisateur paniqué manoeuvre ledit frein en agissant uniquement par instinct.

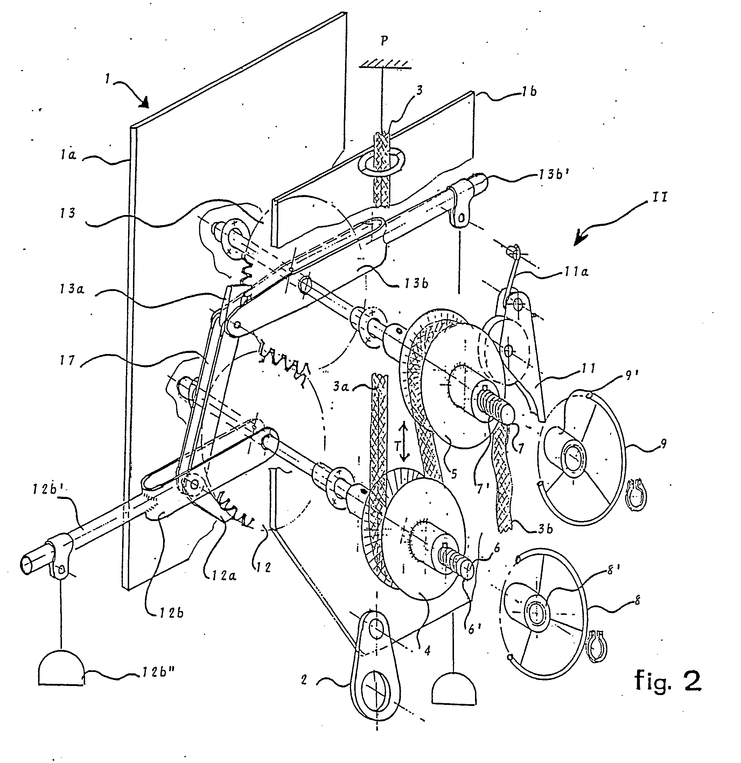

Dans l'appareil II illustré à la figure 2, les mouvements rotatifs inverses des deux roues dentées 12 et 13 sont assurés manuellement. A cet effet, la rotation des deux roues dentées engrenées 12 et 13 est assujettie à deux cliquets 12a et 13a qui sont montés articulés aux deux extrémités d'une bielle 17, de manière à ce que lorsque l'un est appliqué sur une roue et sert d'entraîneur au mouvement de rotation l'autre, appliqué sur l'autre roue, sert de moyen de retenue au mouvement de rotation inverse. Ces deux cliquets 12a et 13a sont également articulés sur deux leviers 12b et 13b montés pivotants chacun autour des deux arbres 6 et 7 respectivement servant de pivot d'appui. Ces deux leviers 12b et 13b sont pourvus chacun d'un prolongement 12b′ et 13b′ formant bras et disposé le premier de manière à ce que le cliquet 12a soit positionné entre le bras 12b′ et l'arbre d'appui 6 et le deuxième cliquet 13a soit positionné de manière à ce que l'arbre d'appui 7 soit positionné entre le cliquet et le bras 13b′. On comprend qu'un couple de travail appliqué sur les bras 12b′ et 13b′ et exercée par la force musculaire des mains ou des pieds à l'aide d'étriers 12b″ et 13b″, les deux cliquets 12a et 13a assurent en alternance et simultanément, l'entraînement dans un sens de rotation de l'engrenage - roue dentée 12, roue dentée 13 - et la retenue dans le sens de rotation inverse.

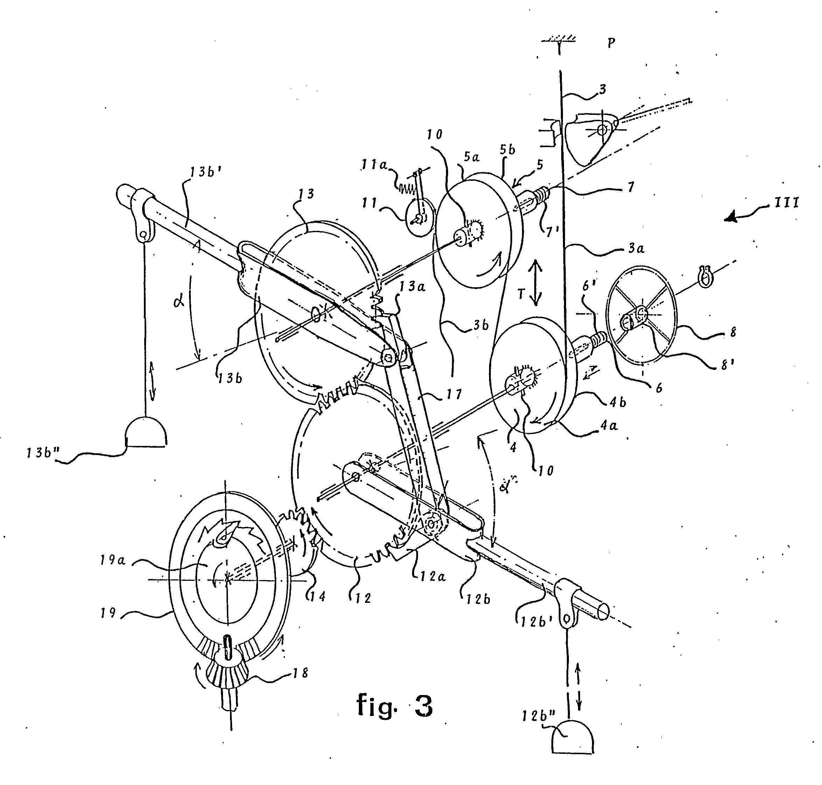

Dans l'appareil III illustré à la figure 3, les mouvements rotatifs inverses des deux roues dentées 12 et 13 peuvent être assurés soit manuellement soit par un moteur. Pour éviter que l'entraînement manuel par les bras de leviers 12b′ et 13b′ ne mette en mouvement la rotation de l'arbre de sortie 18 d'un moteur, ce dernier est accouplé au pignon 14 par l'intermédiaire d'un réducteur 19 comportant une roue libre intérieure 19a.

On comprend que les appareils I, II et III, qui viennent d'être ci-dessus décrits et représentés, l'ont été en vue d'une divulgation plutôt que d'une limitation. Bien entendu, divers aménagements, modifications et améliorations pourront être apportés aux exemples ci-dessus, sans pour autant sortir du cadre de l'invention pris dans ses aspects et dans son esprit les plus larges. Ainsi, par exemple les cliquets 12a et 13a peuvent être remplacés par des roues libres installées à l'intérieur des roues dentées 12 et 13 et actionnées par des leviers.

Afin de permettre une meilleure compréhension des dessins, une liste des références avec leurs légendes est ci-après énumérée.

| | |
|---|---|
| 1 | Bâti |
| 1a, 1b | Flasques du bâti 1 |
| 2 | Mousqueton d'accrochage |
| 3 | Corde |
| 3a | Brin tendu |
| 3b | Brin libre |
| 4 | Poulie inférieure |
| 5 | Poulie supérieure |
| 4a,4b | Joues de la poulie 4 |
| 5a,5b | Joues de la poulie 5 |
| 4a′,4b′ | Moyeux des joues 4a,4b |
| 5a′,5b′ | Moyeux des joues 5a,5b |
| 4′,5′ | Bagues de fond de gorge |
| 6,7 | Arbres d'entraînement |
| 8,9 | Volants de manoeuvre |
| 8′,9′ | Moyeux de vissage |
| 10 | Goupille |
| 11 | Galet-presseur |
| 11a | Ressort de rappel du galet 11 |
| 12 | Roue dentée inférieure |
| 13 | Roue dentée supérieure |
| 12a,13a | Cliquets |
| 12b,13b | Leviers des cliquets 12a,13a |
| 12b′,13b′ | Bras de levier |
| 12b″,13b″ | Etriers |
| 14 | Pignon |
| 15 | Réducteur |
| 15a | Arbre de sortie du réducteur 15 |
| 15b | Arbre d'entrée du réducteur 15 |
| 16 | Manchon d'accouplement |
| 17 | Bielle liant les cliquets 12a,13a |
| 18 | Arbre de sortie d'un moteur |
| 19 | Réducteur |
| 19a | Roue libre du réducteur 19 |
| P | Point fixe du brin de corde 3a |
| Flèche T | Mouvements de translation |

**Revendications**

1. Appareil pour la traction de charges sur câbles lisses verticaux (3) comprenant au moins deux poulies fixes inférieure (4) et supérieure (5) agencées coplanairement pour faire former un S audit câble (3) enroulé à l'intérieur des gorges desdites poulies, les deux poulies (4 et 5) étant accouplées coaxialement à deux roues dentées (12 et 13) motrices entraînées en sens inverse et montées coplanairement de manière à engrener l'une dans l'autre, les deux arbres d'entraînement (6 et 7) sur lesquels sont calées les poulies (4 et 5) et les roues dentées (12 et 13) étant montés en libre rotation à l'intérieur de deux flasques parallèles (1a et 1b) qui, formant bâti (1), supportent intérieurement les deux roues dentées engrenées (12 et 13) et extérieurement, en porte-à-faux, les susdites poulies (4 et 5), les mouvements rotatifs inverses des deux roues dentées engrenées (12 et 13) étant assujettis à deux cliquets (12a et 13a) disposés de manière à ce que lorsque l'un est appliqué sur une roue et sert d'entraîneur à son mouvement de rotation l'autre, appliqué sur l'autre roue, sert de retenue au mouvement de rotation inverse, CARACTERISE PAR LE FAIT QUE lesdits deux cliquets (12a et 13a) sont montés articulés d'une part, sur deux leviers (12b et 13b) montés pivotants chacun autour d'un des deux arbres (6 et 7) servant de pivot d'appui auxdits leviers et d'autre part, aux deux extrémités d'une bielle (17) coordonnant les mouvements des deux leviers (12b et 13b) dont l'un au moins est pouvu d'un prolongement (12b' et 13b') formant un bras de levier sur lequel est appliqué une force musculaire.

2. Appareil selon la revendication 1, CARACTERISE PAR LE FAIT QUE les deux leviers (12b et 13b) sont pourvus chacun d'un prolongement (12b' et 13b') formant bras et disposé le premier (12b) de manière à ce que le cliquet (12a) soit positionné entre le bras (12b') et l'arbre d'appui (6) et le deuxième (13b) de manière à ce que l'arbre d'appui (7) soit positionné entre le cliquet (13a) et le bras (13b').

3. Appareil selon la revendication 1, CARACTERISE PAR LE FAIT QUE les susdites poulies (4 et 5) sont constituées chacune de deux joues dissociables (4a, 4b et 5a, 5b) autorisant, à l'aide d'un moyen de blocage approprié, le réglage de la distance d'écartement modulable en fonction du diamètre de la corde (3) afin d'exercer un pincement sur ladite corde.

4. Appareil selon les revendications 1, 2 et 3, CARACTERISE PAR LE FAIT QUE les extrémités des susdits arbres (6 et 7) portant les poulies (4 et 5) sont aménagées de filetages (6' et 7') sur lesquels viennent se visser ou se dévisser des écrous de serrage (8' et 9') formant les moyeux de volants de manœuvre (8 et 9), afin d'assurer le réglage et le blocage de l'écartement des joues (4a, 4b et 5a, 5b).

5. Appareil selon les revendications 1, 2 et 3, CARACTERISE PAR LE FAIT les susdites joues (4a, 4b et 5a, 5b) sont fixées chacune sur un moyeu (4a', 4b' et 5a', 5b') alésé de manière à ce que les moyeux (4a' et 5a') du côté flasque (1b) du bâti (1) d'une part, s'ajustent sur les deux arbres d'entraînement (6 et 7), et à ce que les moyeux (4b' et 5b') d'autre part s'ajustent sur les moyeux (4a' et 5a'), lesdits moyeux (4a',4b',5a',5b') étant clavetés sur les susdits arbres d'entraînement (6 et 7) au moyen de goupilles (10).

6. Appareil selon l'une quelconque des revendications 1 à 5 et selon lequel l'une des roues dentées (12 et 13) au moins est engrenée dans un pignon (14) accouplé sur l'arbre de sortie (18) d'un entraînement moteur, CARACTERISE PAR LE FAIT QUE le susdit pignon (14) est calé sur l'arbre de sortie (15a) d'un réducteur de vitesse (15) dont l'arbre d'entrée (15 b) est équipé d'un manchon d'accouplement (16) avec un moteur, lequel manchon (16) est agencé d'un frein à mâchoires d'écartement fixe à double sens pourvu de garnitures interchangeables montées pivotantes autour d'un axe perpendiculaire à l'arbre d'entrée (15b) du réducteur.

7. Appareil selon les revendications 1 à 6 prises ensemble, CARACTERISE PAR LE FAIT QUE l'arbre de sortie (18) d'un moteur est accouplé au pignon (14) par l'intermédiaire d'un réducteur (19) comportant une roue libre intérieure (19a).

8. Appareil selon l'une quelconque des revendications 1 à 7, CARCTERISE PAR LE FAIT QUE les susdits cliquets (12a et 13a) peuvent être remplacés par des roues libres installées à l'intérieur des roues dentées (12 et 13) et actionnées par des leviers.

9. Appareil selon la revendication 6, CARACTERISE PAR LE FAIT QUE l'arbre d'entrée (15b) du réducteur (15) est équipé d'un manchon d'accouplement (16) avec un moteur du type perceuse-dévisseuse.

fig.1

fig. 2

EP 0 364 429 A1

fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 391 757 (J. POMAGALSKI S.A. et al.)<br>* En entier * | 1 | B 66 D 1/74 |
| A | FR-A-2 221 980 (SAFARE S.A.)<br>* Figure 2; page 1, lignes 27-41; revendications 2,3 * | 1 | |
| A | US-A-3 116 049 (STRANAHAN)<br>* Figures 2-5; colonne 2, ligne 63 - colonne 3, ligne 30 * | 1 | |
| A | US-A-1 685 015 (AYCOCK)<br>* Figures * | 1 | |
| A | FR-A-1 411 691 (J. POMAGALSKI S.A.)<br>* Figures; page 2, colonne de droite, lignes 8-44 * | 1 | |
| A | FR-A-2 217 259 (KÄUFER)<br>* Figures 1-4; page 6, lignes 3-37; page 8, lignes 21-28 * | 1,6,7 | |

**DOMAINES TECHNIQUES RECHERCHES (Int. Cl.5)**

B 66 D
F 16 H

Le présent rapport a été établi pour toutes les revendications

| Lieu de la recherche | Date d'achèvement de la recherche | Examinateur |
|---|---|---|
| LA HAYE | 11-12-1989 | GUTHMULLER J.A.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)